# EUROPÄISCHE PATENTANMELDUNG

(11) **EP 3 929 740 A1**
(43) Veröffentlichungstag der Anmeldung: **29.12.2021**
(21) Anmeldenummer: 20182514.8
(22) Anmeldetag: 26.06.2020
(51) Int. Cl.: G06F 9/455, G06F 9/50, H04L 12/24, G06F 8/60, G06F 9/54

(54) **VERFAHREN ZUR ORCHESTRIERUNG EINER CONTAINER-BASIERTEN ANWENDUNG AUF EINEM ENDGERÄT**

(71) Anmelder: Siemens Aktiengesellschaft, 80333 München (DE)
(72) Erfinder: Feist, Christian Peter, 80689 München (DE); Knierim, Christian, 81373 München (DE)

(57) **Zusammenfassung**

Verfahren zur Orchestrierung einer Container-basierten Anwendung, die auf einem Endgerät (20) ausgeführt wird, bei dem
- eine Implementierungsinformation in einer Orchestrierungsslaveeinheit (OSL) auf dem Endgerät (20) über eine Kommunikationsverbindung (30) von einer Orchestrierungsmastereinheit (OMA) empfangen wird, und
- die Anwendung anhand der Implementierungsinformation durch die Orchestrierungsslaveeinheit (OSL) konfiguriert und/oder gesteuert wird, wobei
- die empfangene Implementierungsinformation zusätzlich auf eine Speichereinheit (ME) im Endgerät persistent gespeichert wird, und
- wenn die Kommunikationsverbindung (30) zur Orchestrierungsmastereinheit (OMA) unterbrochen ist, die letzte gespeicherte Implementierungsinformation von der Orchestrierungsslaveeinheit (OSL) abgerufen und anhand der letzten gespeicherten Implementierungsinformation die Anwendung konfiguriert und/oder gesteuert wird.

## Beschreibung

Die Erfindung betrifft ein Verfahren sowie ein System zur Orchestrierung einer Container-basierten Anwendung, die auf einem Endgerät ausgeführt wird.

Softwareapplikationen, im Weiteren kurz auch Anwendungen genannt, werden zunehmend mittels sogenannter Container auf Geräten, wie beispielsweise Internet der Dinge (IoT)-Geräten oder Randgeräten (Edge Devices), die einen Eintrittspunkt in ein Service Provider-Netzwerk bilden, implementiert. Bei einer Container-basierten Implementierung einer Anwendung werden die Komponenten einer Anwendungssoftware in einem oder mehreren Containern mit den zur Ausführung notwendigen Bibliotheken und dergleichen gebündelt und auf einer lokalen Laufzeitumgebung in dem Gerät ausgeführt. Durch eine Containerisierung kann verwaltet und gesteuert werden, welche Systemressourcen des Geräts den Prozessen in einem Container zugewiesen werden.

Solche Container-basierten Anwendungen werden üblicherweise durch ein zentrales Management, beispielsweise ein Orchestrierungssystem wie "Kubernetes", verteilt und gesteuert. Das Orchestrierungssystem orchestriert in Containern laufende Arbeitsprozesse, die auf Knoten, beispielsweise physische oder virtuelle Maschinen in einem Cluster, ablaufen. Der Cluster mit seinen Knoten wird über einen dedizierte Orchestrierungsmaster, beispielsweise einen Kubernetes-Master gesteuert, der die Container auf die Knoten verteilt und verwaltet. Der Orchestrierungsmaster kommuniziert dazu in einer in der Informationstechnik bekannten Master-Slave Beziehung mit einem Orchestrierungsslave, beispielsweise dem Programm "Kübelet", auf jedem einzelnen Knoten. Der Orchestrierungsslave ist für den Status des Knotens verantwortlich. Der Orchestrierungsslave wird von einem Controller-Manager im Orchestrierungsmaster gesteuert und übernimmt das Starten und Stoppen von Containern. In kurzen zeitlichen Abständen meldet der Orchestrierungsslave den Status an den Orchestrierungsmaster. Bei einem Fehler oder der Nicht-Erreichbarkeit des Knotens erkennt der Orchestrierungsmaster dies aufgrund des nicht gemeldeten Status. Herkömmlicherweise startet der Controller-Manager dann erneut die Container, aber auf anderen "verfügbaren" Knoten.

Ein typisches Einsatzszenario von Container-basierten Anwendungen ist somit eine Architektur, bei der es unerheblich ist, auf welchem Gerät ein Container läuft und Container beliebig auf diverse Geräte verteilt ablaufen und skaliert werden. Anwendungen bzw. deren Konfiguration auf Container können dennoch gerätespezifisch gemanagt werden, indem Container mithilfe von sogenannten Node-Selektoren einem einzelnen Gerät fest zugeordnet werden. Zum störungsfreien Ablauf einer solchen Container-basierten Anwendung ist eine kontinuierliche Verbindung zwischen dem Orchestrierungsmaster und dem Orchestrierungsslave auf dem Gerät notwendig.

Speziell bei mobilen Internet-der-Dinge-Geräten, die beispielsweise in Zügen oder Autos verbaut sind, kann keine permanente Konnektivität zwischen dem Gerät und einem Orchestrierungsmaster garantiert werden. Es kann auch über einen längeren Zeitraum diese Verbindung ausfallen. Ein solcher Verbindungsabbruch kann durch einen Ausfall des Orchestrierungsmaster oder auch durch den Abbruch und somit Wegfall der Übertragungsverbindung selbst hervorgerufen werden. Bei Letzterem ist das Endgerät komplett von einem unterstützenden Netzwerk mit Servern, die bspw. mit der Anwendung kommunizieren, getrennt und kann somit auch keine Daten an netzseitige Schnittstellen der Anwendung wie beispielsweise Reporting-Systeme senden. Bei beiden Arten der Verbindungsunterbrechung führt ein Neustart des Gerätes dazu, dass die Information, welche Container-basierten Komponenten auf dem Endgerät gestartet werden sollen, nicht mehr vorhanden ist. Dies wird dadurch verursacht, dass die Information für einen Neustart von dem auf dem Gerät installierten Orchestrierungsslave beim Start des Geräts oder der Komponente selbst beim Orchestrierungsmaster abgerufen wird. Dieses Verhalten ist dadurch begründet, dass in typischen Anwendungsgebieten wie der Container-Virtualisierung, wie beispielsweise dem Cloud-Computing, der Kubernetes-Master bei Nicht-Verfügbarkeit des Endgerätes Ressourcen auf andere Endgeräte auslagert.

In einem Internet der Dinge-Umfeld ist diese Auslagerungsmöglichkeit häufig nicht gegeben, da ein Großteil der ContainerInstanzen ausschließlich auf dem einen vorgesehenen Gerät läuft. Somit können insbesondere sicherheitskritische Anwendungen, die hochverfügbar sein müssen, nicht als Container-basierte Anwendung bereitgestellt werden.

Es ist somit die Aufgabe der vorliegenden Erfindung, ein Orchestrierungssystem bzw. ein Orchestrierungsverfahren zu schaffen, bei dem der bereitgestellte Dienst auch bei einer fehlenden Verbindung zwischen dem Orchestrierungsmaster und einem Endgerät weiterhin ohne Unterbrechung ausgeführt wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Orchestrierung einer Computer-basierten Anwendung, die auf einem Endgerät ausgeführt wird, bei dem eine Implementierungsinformation in einer Orchestrierungsslaveeinheit auf dem Endgerät über eine Kommunikationsverbindung von einer Orchestrierungsmastereinheit empfangen wird und die Anwendung anhand der Implementierungsinformation durch die Orchestrierungsslaveeinheit konfiguriert und/oder gesteuert wird, wobei die empfangene Implementierungsinformation zusätzlich auf eine Speichereinheit im Endgerät persistent gespeichert wird und, wenn die Kommunikationsverbindung zur Orchestrierungseinheit unterbrochen ist, die letzte gespeicherte Implementierungsinformation von der Orchestrierungsslaveeinheit abgerufen und anhand der letzten gespeicherten Implementierungsinformation die Anwendung konfiguriert und/oder gesteuert wird.

Ein Endgerät bezeichnet ein dediziertes Gerät, wie beispielsweise ein Internet der Dinge (IoT)-Gerät oder ein Randgerät (Edge Device) auf dem die Anwendung ausgeführt wird, im Gegensatz zu einem Gerät oder System, das aus einer Mehrzahl von Komponenten besteht und die Anwendung auf einem oder mehreren beliebigen der Komponenten ausgeführt werden kann. Eine Orchestrierungsmastereinheit wie beispielsweise ein Kubernetes-Master ist dabei in einer vom Endgerät physisch getrennten Einheit, die beispielsweise einem Steuerungsnetzwerk angehört, angeordnet. Die Container-basierte Anwendung kommuniziert dabei beispielsweise mit einer Anwendungsspezifischen Einheit in dem Steuerungsnetzwerk zum Austausch von Anwendungsdaten. Zur Orchestrierung der Containerbasierten Anwendung kommuniziert die Orchestrierungsmastereinheit mit der Orchestrierungsslaveeinheit über eine Kommunikationsverbindung. Wenn die Kommunikationsverbindung zur Orchestrierungsmastereinheit unterbrochen ist, kann dies beispielsweise durch eine Nichtverfügbarkeit der Orchestrierungsmastereinheit oder durch einen Ausfall der Kommunikationsverbindung selbst begründet sein. Mit einer Unterbrechung der Kommunikationsverbindung sind beide Optionen umfasst. Implementierungsinformation, die auch als Deployment Information bezeichnet wird, wird aktiv von der Orchestrierungsmastereinheit an die Orchestrierungsslaveeinheit übertragen. Die Implementierungsinformation ändert sich nur, wenn ein Administrator am Orchestrierungsmaster Änderungen in Bezug auf die Anwendung vornimmt. Anschließend werden die Implementierungsinformationen von der Orchestrierungsmastereinheit an die Orchestrierungsslaveeinheit übertragen.

Durch das persistente, also nicht flüchtige Abspeichern der empfangenen Implementierungsinformation auf einer Speichereinheit im Endgerät kann lokal auf dem Endgerät diese Information von der Orchestrierungsslaveeinheit abgerufen und die Anwendung auch bei fehlender Verbindung zur Orchestrierungsmastereinheit wieder aktiviert bzw. aufrechterhalten werden. Somit wird eine kontinuierliche Bereitstellung der Anwendung sichergestellt. Damit können auch sicherheitskritische Dienste, die mit hoher Ausfallsicherheit auf dem Endgerät verfügbar sein müssen, Container-basiert bereitgestellt werden. Ist die Kommunikationsverbindung intakt, wird bei einem Ausfall der Anwendung auf dem Endgerät die Implementierungsinformation von der Orchestrierungsslaveeinheit bei der Orchestrierungsmastereinheit erneut abgerufen.

In einer vorteilhaften Ausführungsform wird, wenn die Kommunikationsverbindung zur Orchestrierungsmastereinheit unterbrochen ist und mindestens eine Containerinstanz auf dem Endgerät ausfällt, die mindestens eine Containerinstanz anhand der letzten gespeicherten Implementierungsinformationen durch die Orchestrierungsslaveeinheit neu gestartet.

Üblicherweise würde eine Orchestrierungsslaveeinheit erst nach einer Rückmeldung von der Orchestrierungsmastereinheit, basierend auf der empfangenen Nachricht, eine Containerinstanz neu starten. Durch die auf der Speichereinheit persistent gespeicherte Implementierungsinformation kann nun die Orchestrierungsslaveeinheit eigenständig eine entsprechende Containerinstanz zeitnah neu starten. Eine Containerinstanz bezeichnet eine konkrete Containerausführungsumgebung mit einem entsprechenden Anwendungsprogramm, die basierend auf einem Containerabbild, auch Container-Image bezeichnet, durch die Implementierungsinformation beschrieben wird.

In einer vorteilhaften Ausführungsform wird, wenn die Kommunikationsverbindung zur Orchestrierungsmastereinheit unterbrochen ist und das Endgerät neu gestartet wird, die Anwendung anhand der letzten gespeicherten Implementierungsinformation durch die Orchestrierungsslaveeinheit gestartet.

Somit kann sogar bei einem Neustart des Endgeräts und nicht nur bei Ausfall der Anwendung auf dem laufenden Endgerät die Anwendung wieder auf dem Endgerät aktiviert werden. Das Endgerät kann somit vom ausgeschalteten Zustand ohne Verbindung zur Orchestrierungsmastereinheit gestartet und anhand der gespeicherten Implementierungsinformation von der Orchestrierungsslaveeinheit wieder konfiguriert und gestartet werden. In der bisher üblichen Arbeitsweise zwischen Orchestrierungsmaster- und Orchestrierungsslaveeinheit würde die Anwendung auf dem Endgerät nicht gestartet werden, da bei einem Ausschalten des Endgeräts auch die Implementierungsinformation gelöscht worden wäre und von der Orchestrierungsmastereinheit wegen der fehlenden Kommunikationsverbindung keine neue Implementierungsinformation in der Orchestrierungsslaveeinheit empfangen wird. Dieses veränderte Verhalten kann beispielsweise über ein eigenes Orchestrierungsslave-"Plug In" im Endgerät realisiert werden.

In einer vorteilhaften Ausführungsform wird eine priorisierte Containerinstanz beim Erstellen der Implementierungsinformation durch die Orchestrierungsmastereinheit als "priorisiert" gekennzeichnet.

Dies ermöglicht es, dass beispielsweise eine sicherheitsrelevante Containerinstanz als priorisierte Containerinstanz zu kennzeichnen. Zur Laufzeit der Anwendung wird der priorisierte Container identifiziert und bevorzugt, insbesondere kurzfristig und zeitlich gegenüber anderen Containern bevorzugt, durch die Orchestrierungsslaveeinheit wieder instanziiert und neu gestartet. Eine solche priorisierte Containerinstanz kann beispielsweise durch ein Label in der Implementierungsinformation gekennzeichnet sein. Somit ist auch eine Implementierung von Anwendungen mit hoher Verfügbarkeit, wie bspw. sicherheitsrelevante Anwendungen, in Container-basierter Weise möglich.

In einer vorteilhaften Ausführungsform ist mindestens ein Notfall-Containerabbild in der Speichereinheit gespeichert, das mindestens eine Funktion ausführt, die bei vorhandener Kommunikationsverbindung durch eine über die Kommunikationsverbindung mit dem Endgerät verbundene Anwendungsschnittstelle ausgeführt wird.

Somit werden alle Daten und/oder Nachrichten, die bei vorhandener Kommunikationsverbindung von der Container-basierten Anwendung im Endgerät an eine vom Endgerät lokal getrennt angeordnete Anwendungsschnittstelle gesendet werden, gespeichert. Damit kann nach einer Wiederherstellung der Kommunikationsverbindung mit der Anwendungsschnittstelle, beispielsweise in einem Backendsystem oder einem verteilten Serversystem oder auch in einem Steuerungsnetz, dort in der für die Anwendung üblichen Form behandelt werden. Auch Nachrichten oder Informationen, die von der Orchestrierungsslaveeinheit an die Orchestrierungsmastereinheit gesendet werden, können in einer Notfallcontainerinstanz gespeichert und, wenn die Kommunikationsverbindung mit der Orchestrierungsmastereinheit wieder verbunden und aktiv ist, an die Orchestrierungsmastereinheit übermittelt werden. Dies ermöglicht es im Nachhinein nachvollziehen zu können, ob eine Komponente lokal öfters neu gestartet wurde und ob der Notfallmodus überhaupt aktiviert wurde.

In einer vorteilhaften Ausführungsform ändert die Orchestrierungsslaveeinheit abhängig von einer von der Orchestrierungsmastereinheit empfangenen Notfall-Richtlinie die Konfiguration und/oder Steuerung der Anwendung.

Die Notfall-Richtlinie ist dabei Bestandteil der Implementierungsinformation und wird mit dieser in der Speichereinheit persistent abgespeichert. Die Notfall-Richtlinie ist ein zusätzlicher Bestandteil der Implementierungsinformation. Die Notfall-Richtlinie definiert beispielsweise, ab wann einzelne Notfallmaßnahmen aktiviert werden. Beispielsweise kann eine Zeitspanne nach einem Netzausfall definiert werden, ab der Notfallaktionen gestartet werden.

In einer vorteilhaften Ausführungsform startet die Orchestrierungsslaveeinheit abhängig von der Notfall-Richtlinie die mindestens eine Notfall-Containerinstanz und/oder stoppt mindestens eine Arbeits-Containerinstanz der Anwendung.

Durch eine Notfallcontainerinstanz können beispielsweise ermittelte Sensordaten zwischengespeichert oder verarbeitet werden, was bei einer aktiven Kommunikationsverbindung von der mit dem Endgerät verbundenen Anwendungsschnittstelle ausgeführt werden würde. Durch das Stoppen von Arbeitscontainern können Ressourcen freigegeben und beispielsweise eine Notfallcontainerinstanz zugeordnet werden. Somit kann die Container-basierte Anwendung möglichst unterbrechungsfrei und entsprechend der üblichen Ausführung durchgeführt werden.

In einer vorteilhaften Ausführungsform umfasst die Notfall-Richtlinie unterschiedliche Stufen-Richtlinien und abhängig von einer ermittelten Notfallstufe wird eine der Notfallstufe zugeordnete Stufen-Richtlinie von der Orchestrierungsslaveeinheit aktiviert.

Eine Stufen-Richtlinie kann beispielsweise mithilfe unterschiedlicher Kennungen, so genannter Labels, gekennzeichnet sein. Dies ermöglicht ein der jeweiligen Situation angepasstes und damit sehr flexibles Reagieren des Endgeräts und eine flexible Ausgestaltung der Anwendung im Notfall.

In einer vorteilhaften Ausführungsform wird die Notfallstufe abhängig von einer Dauer und/oder einer Art des Ausfalls der Kommunikationsverbindung und/oder der Masterorchestrierungseinheit ermittelt.

Somit können mehrere Eskalationsstufen je nach Dauer und Art des Ausfalls definiert und entsprechende Maßnahmen eingeleitet werden.

In einer vorteilhaften Ausführungsform werden abhängig von der zugeordneten Stufen-Richtlinie weitere Notfallcontainerinstanzen gestartet und/oder der mindestens einen Notfallcontainerinstanz für die Dauer der ermittelten Notfallstufe unterschiedlich viele Ressourcen zugeordnet.

Durch die Anpassung der Ressourcen kann auch bei einem längeren Ausfall der Kommunikationsverbindung bzw. der Orchestrierungsmastereinheit der Betrieb der Anwendung im üblichen Umfang aufrechterhalten werden.

In einer vorteilhaften Ausführungsform werden abhängig von der zugeordneten Stufen-Richtlinie nicht für den Notfallbetrieb notwendige vorhandene Containerinstanzen gestoppt, pausiert oder ihre Ressourcenzuteilungen geändert und dadurch freigewordene Ressourcen der Notfallcontainerinstanz zugeordnet.

Dies ermöglicht einen flexiblen, der Notfallsituation angepassten Notfallbetrieb der Anwendung. Ein entsprechendes Containerimage in der Implementierungsinformation kann geändert, beispielsweise die zugeordnete CPU-Quota reduziert werden.

In einer vorteilhaften Ausführungsform werden nach einer Wiederherstellung der Kommunikationsverbindung die in der Notfallcontainerinstanz gesammelten Daten an die Anwendungsschnittstelle, die über die Kommunikationsverbindung mit dem Endgerät verbunden ist, übermittelt.

Somit gehen Daten, Informationen oder auch Nachrichten, die während des Notfallbetriebs bzw. während des Ausfalls der Kommunikationsverbindung mit der Orchestrierungsmastereinheit erzeugt bzw. gesammelt wurden, nicht verloren und können in der Anwendungsschnittstelle, beispielsweise in einer Backend-Cloud-Umgebung oder in einem Steuerungsknoten eines Steuerungsnetzwerkes, ausgewertet bzw. bearbeitet werden. Es können beispielsweise Maßnahmen aus den übermittelten Daten abgeleitet und ausgeführt werden.

In einer vorteilhaften Ausführungsform wird nach einer Wiederherstellung der Kommunikationsverbindung in der Orchestrierungsslaveeinheit eine Normalbetrieb-Richtlinie von der Orchestrierungsmastereinheit empfangen und das Endgerät in einen Normalzustand übergeführt. Somit kann die Container-basierte Anwendung auf dem Endgerät in die übliche Ausführungsumgebung und Ausführungsart überführt werden.

Ein zweiter Aspekt der Erfindung betrifft ein System zur Orchestrierung einer Container-basierten Anwendung, die auf einem Endgerät ausgeführt wird, umfassend ein Endgerät, das eine Orchestrierungsslaveeinheit enthält und eine über eine Kommunikationsverbindung mit dem Endgerät verbundene Orchestrierungsmastereinheit, die derart ausgebildet sind
- eine Implementierungsinformation in der Orchestrierungsslaveeinheit über die Kommunikationsverbindung von der Orchestrierungsmastereinheit zu empfangen,
- die Anwendung anhand der Implementierungsinformation durch die Orchestrierungsslaveeinheit zu konfigurieren und/oder zu steuern, wobei
- die empfangene Implementierungsinformation zusätzlich auf eine Speichereinheit im Endgerät persistent gespeichert wird, und
- wenn die Kommunikationsverbindung unterbrochen ist, die letzte gespeicherte Implementierungsinformation von der Orchestrierungsslaveeinheit abzurufen und anhand der letzten gespeicherten Implementierungsinformation die Anwendung konfiguriert und/oder gesteuert wird.

Durch ein solches System können Container-basierte Anwendungen, insbesondere Anwendungen, die eine sicherheitskritische oder betriebssicherheitsrelevante Funktion ausführen, auch auf einem bestimmten, fest vorgegebenen Endgerät implementiert werden, da auch bei einem Ausfall der Kommunikationsverbindung der Betrieb der Anwendung fortgeführt und somit sichergestellt werden kann. Dieses kann beispielsweise über ein eigenes Orchestrierungsslave-"Plug In" im Endgerät realisiert werden.

Ein dritter Aspekt der Erfindung betrifft ein Computerprogrammprodukt, umfassend ein nicht flüchtiges, computerlesbares Medium, das direkt in einen Speicher eines digitalen Computers ladbar ist, umfassend Programmcodeteile, die dazu geeignet sind, die Schritte des Verfahrens durchzuführen.

Die jeweilige Einheit, zum Beispiel Orchestrierungsmastereinheit, Orchestrierungsslaveeinheit oder auch Speichereinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner oder Teil eines Steuerrechners eines Fahrzeugs, ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein. Unter einer Speichereinheit kann im Zusammenhang mit der Erfindung beispielsweise eine Festplatte oder ein sonstiges Speichermedium sein, auf dem Daten persistent gespeichert werden können.

Ein Computerprogrammprodukt, wie zum Beispiel ein Computerprogrammmittel kann beispielsweise als eine Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens sowie des erfindungsgemäßen Systems sind in den Zeichnungen beispielhaft dargestellt und werden anhand der nachfolgenden Beschreibung näher erläutert. Es zeigen:
Fig. 1 ein Beispiel einer bekannten Architektur zur Verwaltung einer Container-basierten Anwendung, die von einem oder mehreren Servern einem Dienstnutzer bereitgestellt wird, in schematischer Darstellung;
Fig. 2 ein Beispiel einer Container-basierten Anwendung, die auf einem vorgegebenen Endgerät ausgeführt wird, in schematischer Darstellung;
Fig. 3 ein erstes Ausführungsbeispiel des erfindungsgemäßen Verfahrens in Form eines Flussdiagramms;
Fig. 4 ein Ausführungsbeispiel des erfindungsgemäßen Systems im Blockdarstellung; und
Fig. 5 ein zweites Ausführungsbeispiel des erfindungsgemäßen Verfahrens in Form eines Nachrichtenablaufs.

Einander entsprechende Teile sind in allen Figuren mit den gleichen Bezugszeichen versehen.

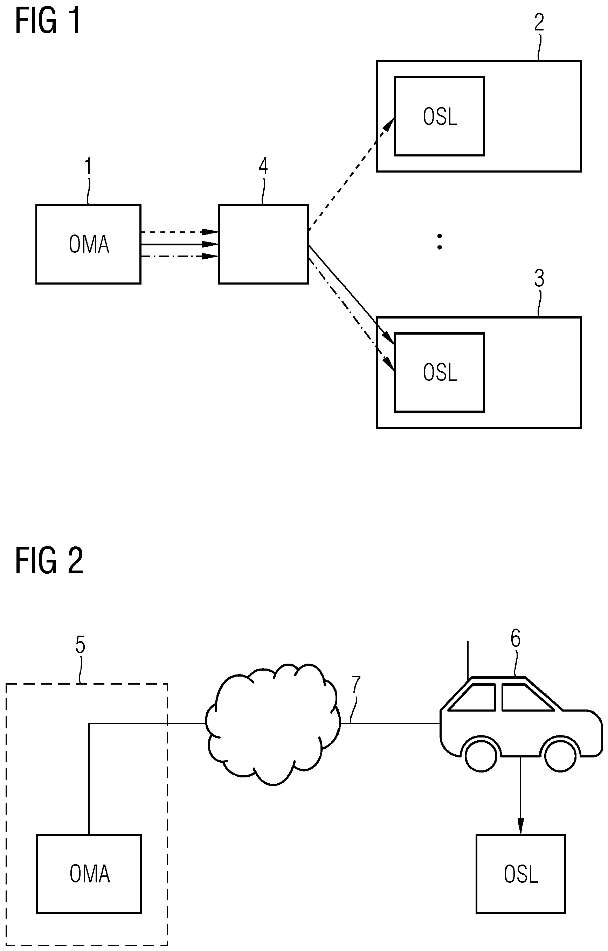

Figur 1 zeigt eine typische Architektur zur Verwaltung einer Computer-implementierten Anwendung durch einen Server 1, die von einem oder mehreren Knoten 2, 3 einem Nutzer der Anwendung bereitgestellt wird. Dabei wird eine Anwendung durch Programmteile ausgeführt, die in einem oder mehreren Containern bereitgestellt werden. Ein Container bzw. eine Containervirtualisierung ist dabei eine Methode, um mehrere Instanzen eines Betriebssystems isoliert voneinander auf einem Host-System zu betreiben. Zur Verwaltung bzw. zum Containermanagement werden häufig Orchestrierungsprogramme, wie beispielsweise Kubernetes, verwendet. Das Orchestrierungsprogramm steuert ein automatisches Verteilen, Skalieren und Warten von Containern auf verteilten Host-Systemen, sogenannten Knoten 2, 3.

Figur 1 zeigt eine solche Orchestrierungsmastereinheit OMA, die die Container auf die einzelnen Knoten 2,3 verteilt und verwaltet. Die Orchestrierungsmastereinheit OMA entscheidet abhängig von den zur Verfügung stehenden Ressourcen, auf welchen der Knoten 2, 3 welcher Container gestartet wird. Die Orchestrierungsmastereinheit OMA verwaltet die auf den Knoten 2, 3 angeordneten Container und überwacht deren Last. Die Orchestrierungsmastereinheit OMA stellt dafür den einzelnen Knoten 2, 3 eine Implementierungsinformation zur Verfügung, die eine entsprechende Orchestrierungsslaveeinheit OSL in den Knoten 2,3 empfängt und an eine Laufzeitumgebung zur Ausführung der Container weitergibt. Neben dem in der Orchestrierungsmastereinheit OMA enthaltenen Scheduler werden die Nachrichten von der Orchestrierungsmastereinheit OMA über einen Lastverteiler 4 an die verschiedenen Knoten 2, 3 verteilt. Die Orchestrierungsmastereinheit ist beispielsweise in einer Steuerungseinheit eines Backend-Systems 1 angeordnet. Bei einem solchen Dienst bzw. bei einer solchen Architektur ist es nicht relevant, auf welchen Knoten 2, 3 ein Container läuft, sondern diese werden beliebig auf diverse Knoten verteilt und skaliert.

Eine Container-basierte Anwendung kann dennoch gerätespezifisch verwaltet werden, indem die Container mithilfe von so genannten Knotenauswahlkennern, auch Node Selector genannt, einem Knoten fest zugeordnet werden. Figur 2 zeigt ein solches Anwendungsszenario, bei dem ein Dienst auf einem Endgerät, hier beispielsweise verbaut in einem Fahrzeug 6, ausgeführt wird. Dazu enthält das Endgerät, hier beispielsweise das Fahrzeug 6, eine Orchestrierungsslaveeinheit OSL, die Steuerungsinformationen für die einzelnen Container über eine Kommunikationsverbindung 7 von einer Orchestrierungsmastereinheit OMA empfängt. Die Orchestrierungsmastereinheit OMA ist beispielsweise in einer Steuerungseinheit in einem Backend-Server 5 eines Dienstproviders angeordnet. Die beschriebene Anwendung kann insbesondere in einem Internet-der-Dinge-Gerät, das eigenständig über die Kommunikationsverbindung 7 mit der Orchestrierungsmastereinheit OMA kommuniziert, bereitgestellt werden.

Speziell bei Endgeräten, die über eine Funkschnittstelle mit einem Backend-System 5 verbunden sind, kann nicht davon ausgegangen werden, dass eine permanente Verbindung zur Orchestrierungsmastereinheit OMA vorhanden ist, sondern diese auch für einen längeren Zeitraum ausfallen kann. Dieser Verbindungsabbruch kann durch einen Ausfall der Orchestrierungsmastereinheit OMA oder durch einen Ausfall der Kommunikationsverbindung 7 herrühren. Dies ist insbesondere bei Endgeräten durch eine mangelhafte oder fehlende Funkverbindung möglich. Dadurch ist das Endgerät 6 komplett vom Backend-Server 5 isoliert und kann somit auch keine Daten an vorhandene Reporting-Systeme senden. Bei beiden Arten der Verbindungsunterbrechung führt ein Neustart des Endgeräts bzw. der Anwendung dazu, dass die Informationen, welche Container-basierten Anwendungskomponenten auf dem Endgerät gestartet werden sollen, nicht mehr vorhanden sind.

Durch das nachfolgend beschriebene Verfahren und System wird eine computerbasierte Anwendung bei beiden Arten der Verbindungsunterbrechung weitergeführt. Dazu wird die auf dem Endgerät für die Orchestrierung betriebene Orchestrierungsslaveeinheit OSL die letzte von der Orchestrierungsmastereinheit OMA erhaltene Implementierungsinformation persistent auf dem Endgerät gespeichert. Bei einem Neustart des Endgeräts wird, sofern keine Verbindung zur Orchestrierungsmastereinheit OMA besteht, die letzte bekannte Implementierungsinformation gestartet.

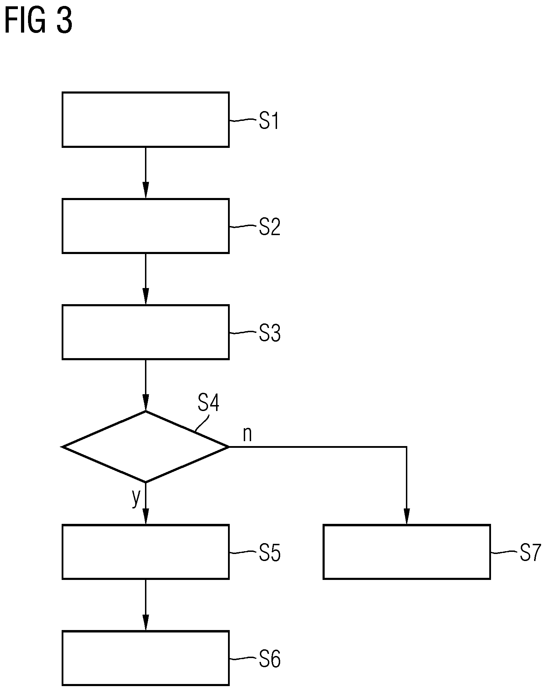

Das Verfahren wird nun anhand von Figur 3 näher erläutert. In einem ersten Verfahrensschritt S1 wird die Implementierungsinformation über eine Kommunikationsverbindung in der Orchestrierungsslaveeinheit OSL von einer Orchestrierungsmastereinheit OMA empfangen. Im Verfahrensschritt S2 wird die Anwendung anhand der Implementierungsinformation durch die Orchestrierungsslaveeinheit OSL konfiguriert und/oder gesteuert. Im nachfolgenden Schritt S3 wird die empfangene Implementierungsinformation zusätzlich auf eine Speichereinheit im Endgerät persistent, also dauerhaft und auch bei Ausschalten des Endgeräts weiter verfügbar, gespeichert. Stellt das Endgerät im Schritt S4 fest, dass die Kommunikationsverbindung zur Orchestrierungsmastereinheit OMA unterbrochen ist, wird die letzte gespeicherte Implementierungsinformation von der Orchestrierungsslaveeinheit OSL aus der Speichereinheit abgerufen, siehe S5. Anhand dieser letzten gespeicherten Implementierungsinformation wird die Anwendung konfiguriert und/oder gesteuert, siehe S6. Wird im Endgerät festgestellt, dass die Kommunikationsverbindung mit der Orchestrierungsmastereinheit OMA vorhandenen ist, siehe Pfeil n in Figur 3, empfängt die Orchestrierungsslaveeinheit OSL Steuerungsinformationen weiterhin von der Orchestrierungsmastereinheit OMA und führt diese entsprechend aus.

Auch anwendungsspezifische Informationen oder von der Anwendung gesammelte Daten werden über die vorhandene Kommunikationsverbindung an die Orchestrierungsmastereinheit OMA oder eine für die Anwendung-spezifische Schnittstelle übertragen. Bei einem Absturz bzw. Abbruch der Anwendung im Endgerät kann bei einer vorhandenen Kommunikationsverbindung die Orchestrierungsmastereinheit OMA erneut Implementierungsinformationen an die Orchestrierungsslaveeinheit OSL übermitteln und die Anwendung im Endgerät wieder starten. Dabei wird die empfangene Implementierungsinformation wieder entsprechend den Verfahrensschritten S1 - S3 behandelt und die neue Implementierungsinformation wiederum in der Speichereinheit persistent gespeichert. Somit umfasst die Speichereinheit des Endgerätes immer die letzte, aktuelle Implementierungsinformation.

Die Implementierungsinformation enthält unter Anderem ein Containerabbild, das Operationen und Dateien für die Anwendungskomponenten, die ein Container ausführen soll, umfasst. Die Orchestrierungsslaveeinheit OSL startet bei Bedarf eine oder mehrere Containerinstanzen, die entsprechend dem Containerimage konfiguriert und ausgeführt werden. Fällt eine Containerinstanz auf dem Endgerät aus und ist die Kommunikationsverbindung zur Orchestrierungsmatereinheit OMA unterbrochen, wird die Containerinstanz anhand der letzten gespeicherten Implementierungsinformationen gestartet. Es wird nicht oder nur eine bestimmte maximale Dauer auf eine Rückmeldung von der Orchestrierungsmastereinheit OMA gewartet. Dieses veränderte Verhalten kann beispielsweise über ein Plug In in der Orchestrierungsslaveeinheit OSL realisiert werden.

Um insbesondere sicherheitskritische Containerinstanzen, die sicherheitskritische Anwendungsmodule umfassen, ohne Unterbrechung bereitstellen zu können, werden sicherheitskritische Containerinstanzen beim Erstellen auf dem Orchestrierungsmaster über spezielle Kennungen, beispielsweise mittels Labels, gekennzeichnet. Solche priorisierten Containerinstanzen können dann bei einem Verbindungsabbruch bevorzugt von der Orchestrierungsslaveeinheit OSL behandelt werden. Dazu wird mindestens ein Notfallcontainerabbild in der Speichereinheit gespeichert, das mindestens eine Funktion ausführt, die bei einer vorhandenen Kommunikationsverbindung durch eine über die Kommunikationsverbindung mit dem Endgerät verbundene Anwendungs-Schnittstelle ausgeführt würde.

Des Weiteren ändert die Orchestrierungsslaveeinheit OSL abhängig von einer von der Orchestrierungsmastereinheit OMA empfangene Notfall-Richtlinie die Konfiguration und Übersteuerung der Anwendung. Die Notfall-Richtlinie ist bevorzugt in der Implementierungsinformation enthalten und kann somit auch mit jeder Implementierungsinformation geändert werden. Die Notfall-Richtlinie wird damit ebenfalls in der Speichereinheit persistent gespeichert und ist somit bei einem Ausfall der Kommunikationsverbindung mit der Orchestrierungsmastereinheit OMA auf dem Endgerät verfügbar.

Die Orchestrierungsslaveeinheit OSL kann dann abhängig von der Notfall-Richtlinie die mindestens eine Notfallcontainerinstanz starten und/oder mindestens eine Arbeitscontainerinstanz der Anwendung stoppen. Beispielsweise kann die Notfall-Richtlinie abhängig von der seit dem Kommunikationsverbindungsausfall abgelaufenen Zeit einzelne, insbesondere unkritische Arbeitscontainerinstanzen stoppen und eine erste oder auch weitere Notfallcontainerinstanzen starten.

Die Notfall-Richtlinie kann unterschiedliche Stufen-Richtlinien umfassen. Stufen-Richtlinien bilden somit eine Hierarchie von Richtlinien, die je nach Art und Dauer eines Notfalls, der wiederum einer bestimmten Notfallstufe zugeordnet ist, von der Orchestrierungsslaveeinheit OSL aktiviert werden. Die Notfallstufe kann neben der Dauer des Ausfalls der Kommunikationsverbindung auch abhängig von der Art des Ausfalls der Kommunikationsverbindung und/oder der Art des Ausfalls der Orchestrierungsmastereinheit OMA ermittelt werden. Zum Beispiel können unterschiedliche Notfallstufen einen Ausfall der Kommunikationsverbindung selbst und eine andere Notfallstufe beim Ausfall der Orchestrierungsmastereinheit OMA vorliegen bzw. zugeordnet werden. Je nach Dauer oder Kombination der Ausfälle können weitere unterschiedliche Notfallstufen zugeordnet werden. Eine oder mehrere Notfallstufen können dabei wiederum einer oder auch mehreren Stufen-Richtlinien zugeordnet sein. Abhängig von der Stufen-Richtlinie können weitere Notfallcontainerinstanzen gestartet werden oder es können einer bereits vorhandenen Notfallcontainerinstanz für die Dauer der ermittelten Notfallstufe unterschiedlich viele Ressourcen zugeordnet werden.

Nach einer Wiederherstellung der Kommunikationsverbindung selbst bzw. einer Wiederherstellung bzw. Verfügbarkeit der Orchestrierungsmastereinheit OMA, werden die in der mindestens einen Notfallcontainerinstanz gesammelten Daten an die Anwendungsschnittstelle übermittelt. Somit gehen die in einer Notfallcontainerinstanz während der Ausfallzeit gesammelten Daten nicht verloren und können von der Backend-seitigen Anwendungsschnittstelle empfangen und ausgewertet oder weitergeleitet werden. Nach der Wiederherstellung der Kommunikationsverbindung wird in der Orchestrierungsslaveeinheit OSL eine Normalbetrieb-Richtlinie von der Orchestrierungsmastereinheit OMA empfangen und das Endgerät in einen Normalzustand überführt. Mindestens eine Notfall-Richtlinie bleibt jedoch in der Speichereinheit verfügbar, sodass bei einem erneuten Abbruch der Verbindung mit der Orchestrierungsmastereinheit OMA die Anwendung durch das Endgerät allein weiterbetrieben werden kann.

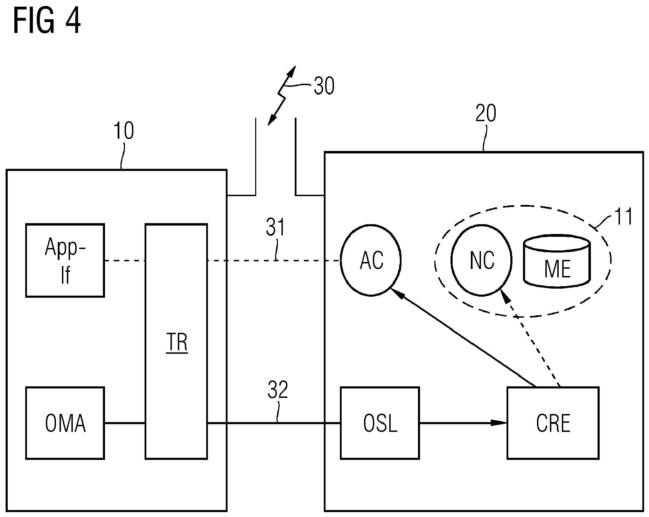

In Figur 4 ist ein Ausführungsbeispiel eines Systems zur Orchestrierung einer Container-basierten Anwendung dargestellt. Das System umfasst ein Endgerät 20, eine mit dem Endgerät verbundene Anwendungsschnittstelle 10. Diese Anwendungsschnittstelle 10 umfasst eine Orchestrierungsmastereinheit OMA sowie eine für die Anwendung-spezifische Einheit App-If, in der beispielsweise Daten, die von der Anwendung auf dem Endgerät ermittelt werden, empfangen und weiterbehandelt werden. Die Anwendungsschnittstelle 10 umfasst des Weiteren eine Sende- und Empfangsschnittstelle TR, die Daten vom Endgerät 20 empfängt bzw. an das Endgerät 20 sendet. Die Kommunikationsschnittstelle ist beispielhaft als eine Funkschnittstelle 30 dargestellt. Logisch kann die Kommunikation zwischen der Anwendungsschnittstelle 10 und dem Endgerät 20 getrennt werden in eine Kommunikation zwischen der Orchestrierungsmastereinheit OMA und der Orchestrierungsslaveeinheit OSL der containerbasierten Anwendung, siehe Verbindung 32, und der Kommunikation, siehe 31, zwischen beispielsweise einem Arbeitscontainer AC im Endgerät 20 und einer für Anwendungspezifischen Einheit App-If in der Anwendungsschnittstelle 10.

Das Endgerät 20 umfasst die Orchestrierungsslaveeinheit OSL, die wiederum Anweisungen an eine Laufzeitumgebung CRE weitergibt. Die Laufzeitumgebung CRE konfiguriert und startet Arbeitscontainerinstanzen AC entsprechend den Anweisungen der Orchestrierungsslaveeinheit OSL. Wenn eine Notfallstufe vorliegt und entsprechend eine Notfall-Richtlinie aktiv ist, wird ein entsprechender Notfallcontainer NC konfiguriert und gestartet.

Das Endgerät 20 umfasst des Weiteren eine Speichereinheit ME, auf der die Implementierungsinformation, die die Orchestrierungsslaveeinheit OSL von der Orchestrierungsmastereinheit OMA empfangen hat, persistent abgespeichert ist. Das Endgerät 20 kann beispielsweise ein mobiles Endgerät, beispielsweise ein in einem Auto oder auch in einem Zug verbautes bzw. angeordnetes Endgerät sein. Das Endgerät 20 kann auch ein Feldgerät oder eine sonstige Komponente in einer Automatisierungsanlage sein, das über einen drahtgebundenen Anschluss, insbesondere ein drahtgebundenes Datennetzwerk, mit einer Steuerungsvorrichtung, in der die Anwendungsschnittstelle 10 angeordnet ist, verbunden sein. Allgemein kann die Kommunikationsschnittstelle eine Funkübertragungsstrecke oder auch eine drahtgebundene Kommunikationsverbindung oder eine Glasfaserverbindung oder dergleichen sein.

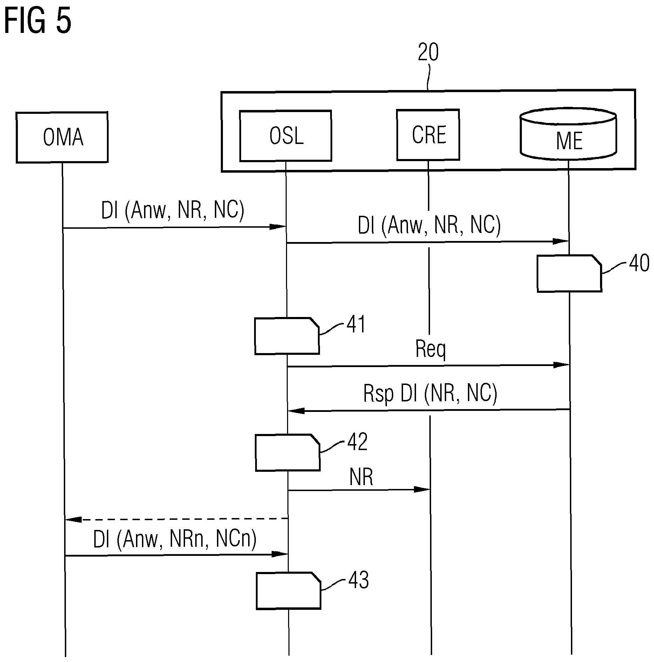

Figur 5 zeigt den Informationsfluss, der zur Steuerung und Konfiguration der Container-basierten Anwendung zwischen der Orchestrierungsmastereinheit OMA und dem Endgerät 20 ausgetauscht wird. Die für die Verwaltung der Container-basierten Anwendung relevanten Komponenten im Endgerät 20 sind die Orchestrierungsslaveeinheit OSL, die Laufzeitumgebung CRE und die Speichereinheit ME. Die Implementierungsinformation DI wird von der Orchestrierungsmastereinheit OMA an die Orchestrierungsslaveeinheit OSL im Endgerät 20 übertragen. Die Implementierungsinformation DI umfasst neben den für den normalen Betrieb der Anwendung notwendigen Informationen Anw, eine Notfall-Richtlinie NR und optional ein Notfall-Containerabbild NC. Die Implementierungsinformation DI wird nach dem Empfang im Endgerät 20 in der Speichereinheit ME persistent, also nicht flüchtig abgespeichert, siehe 40.

Wird im Endgerät 20 ein Ausfall der Kommunikationsverbindung bzw. der Verbindung zur Orchestrierungsmastereinheit OMA festgestellt, siehe 41, fordert die Orchestrierungsslaveeinheit OSL die gespeicherte Implementierungsinformation DI und insbesondere die Notfall-Richtlinie NR und das Notfall-Containerabbild NC an, siehe 42. Im Weiteren werden anhand der Notfall-Richtlinie NR über die Laufzeitumgebung CRI die notwendigen Notfallcontainerinstanzen bzw. Konfigurationsänderungen im den vorhandenen Arbeitscontainerinstanzen und Notfallcontainerinstanzen ausgeführt.

Die Notfall-Richtlinie NR kann derart ausgebildet sein, dass mithilfe unterschiedlicher Notfallstufen, die abhängig von der Dauer und der Art des Verbindungsausfalls zugeordnet werden, unterschiedliche Notfallmaßnahmen ausgeführt werden. Neben dem Starten von temporären Notfallcontainerinstanzen können der Notfallcontainerinstanz auch größere Ressourcen, wie beispielsweise Prozessorzeit oder lokale Speicher, für die Dauer des Ausfalls zur Verfügung gestellt werden. Nicht für den Notfall relevante und lokal gespeicherte Containerabbilder können nach Ablauf einer Zeitspanne zur Ressourcenbereitstellung für die Notfallcontainerinstanzen gelöscht werden oder noch laufende Containerinstanzen angehalten werden. Diese Maßnahmen werden ebenfalls durch die Notfall-Richtlinie bzw. die entsprechende Stufen-Richtlinie vorgegeben.

Sobald die Kommunikationsverbindung zum Netz wieder vorhanden ist, können beispielsweise die gesammelten und temporär beispielsweise in einer Notfallcontainerinstanz gespeicherten Daten an die Applikationsschnittstelle zurückgeliefert werden. Die für den Notfallbetrieb zur Verfügung gestellten Ressourcen werden wieder freigegeben. Abschließend wird ggf. eine aktualisierte Notfall-Richtlinie von der Orchestrierungsmastereinheit OMA in der Orchestrierungsslaveeinheit OSL empfangen und das Endgerät 20 in einen Normalzustand übergeführt, siehe 43.

Die beschriebene Lösung benötigt keine auf dem Endgerät 20 selbst angeordnete Orchestrierungsmastereinheit OMA. Damit können Ressourcen im Endgerät 20 eingespart oder für den Betrieb der Anwendung verwendet werden. Durch die vorgeschlagene Notfall-Richtlinie NR können auf dem Endgerät 20 eigenständig und abhängig von der Zeitdauer und der Art des Ausfalls Notfallmaßnahmen ergriffen werden und zum Beispiel temporär für Kernkomponenten größere Ressourcen oder alternative Ressourcen bereitgestellt werden. Die auf dem Endgerät 20 ergriffenen Sicherheitsmaßnahmen können zeitgesteuert, beispielsweise bei voranschreitender Ausfalldauer, durch die Notfall-Richtlinie verschärft werden. Der zentrale Verwaltungs- und Softwarebereitstellungsmechanismus bleibt erhalten.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Orchestrierung einer Container-basierten Anwendung, die auf einem Endgerät (20) ausgeführt wird, bei dem
- eine Implementierungsinformation (DI) in einer Orchestrierungsslaveeinheit (OSL) auf dem Endgerät über eine Kommunikationsverbindung (30) von einer Orchestrierungsmastereinheit (OMA) empfangen wird (S1), und
- die Anwendung anhand der Implementierungsinformation (DI) durch die Orchestrierungsslaveeinheit (OSL) konfiguriert und/oder gesteuert wird (S2), wobei
- die empfangene Implementierungsinformation (DI) zusätzlich auf eine Speichereinheit (ME) im Endgerät persistent gespeichert wird (S3), und
- wenn die Kommunikationsverbindung (30) zur Orchestrierungsmastereinheit (OMA) unterbrochen ist (S4), die letzte gespeicherte Implementierungsinformation (DI) von der Orchestrierungsslaveeinheit (OSL) abgerufen (S6) und anhand der letzten gespeicherten Implementierungsinformation (DI) die Anwendung konfiguriert und/oder gesteuert wird (S6).

2. Verfahren nach Anspruch 1, wobei wenn die Kommunikationsverbindung (30) zur Orchestrierungsmastereinheit (OMA) unterbrochen ist und mindestens eine Containerinstanz auf dem Endgerät (20) ausfällt, die mindestens eine Containerinstanz anhand der letzten gespeicherten Implementierungsinformation (DI) durch die Orchestrierungsslaveeinheit (OSL) neu gestartet wird.

3. Verfahren nach einem der vorangehenden Ansprüche, wobei wenn die Kommunikationsverbindung (30) zur Orchestrierungsmastereinheit (OMA) unterbrochen ist und das Endgerät (20) neu gestartet wird, die Anwendung anhand der letzten gespeicherten Implementierungsinformation (DI) durch die Orchestrierungsslaveeinheit (OSL) gestartet wird.

4. Verfahren nach einem der vorangehenden Ansprüche, wobei eine priorisierte Containerinstanz beim Erstellen der Implementierungsinformation (DI) durch die Orchestrierungsmastereinheit (OMA) als priorisiert gekennzeichnet wird.

5. Verfahren nach einem der vorangehenden Ansprüche, wobei mindestens ein Notfall-Containerabbild in der Speichereinheit (ME) gespeichert ist, und das Notfall-Containerabbild (NC) mindestens eine Funktion ausführt, die bei vorhandener Kommunikationsverbindung (30) durch eine über die Kommunikationsverbindung (30) mit dem Endgerät (20) verbundene Anwendungsschnittstelle (10) ausgeführt wird.

6. Verfahren nach einem der vorangehenden Ansprüche, wobei die Orchestrierungsslaveeinheit (OSL) abhängig von einer von der Orchestrierungsmastereinheit (OMA) empfangenen Notfall-Richtlinie die Konfiguration und/oder Steuerung der Anwendung ändert.

7. Verfahren nach Anspruch 6, wobei die Orchestrierungsslaveeinheit (OSL) abhängig von der Notfall-Richtlinie die mindestens eine Notfall-Containerinstanz (NC) startet und/oder mindestens eine Arbeits-Containerinstanz (AC) der Anwendung stoppt.

8. Verfahren nach Anspruch 6 oder 7, wobei die Notfall-Richtlinie (NR) unterschiedliche Stufen-Richtlinien umfasst und abhängig von einer ermittelten Notfallstufe, eine der Notfallstufe zugeordnete Stufen-Richtlinie von der Orchestrierungsslaveeinheit (OSL) aktiviert wird.

9. Verfahren nach Anspruch 8, wobei die Notfallstufe abhängig von einer Dauer und/oder einer Art des Ausfalls der Kommunikationsverbindung (30) und/oder der Masterorchestrierungseinheit (OMA) ermittelt wird.

10. Verfahren nach einem der Ansprüche 8 oder 9, wobei abhängig von der zugeordneten Stufen-Richtlinie mindestens eine weitere Notfall-Containerinstanz (NC) gestartet wird und/oder der mindestens einen Notfall-Containerinstanz (NC) für die Dauer der ermittelten Notfallstufe unterschiedlich viele Ressourcen zugeordnet werden.

11. Verfahren nach einem der Ansprüche 8 bis 10, wobei abhängig von der zugeordneten Stufen-Richtlinie nicht für den Notfallbetrieb notwendige vorhandene Containerinstanzen (AC) gestoppt, pausiert, oder ihre Ressourcenzuteilung geändert werden und dadurch freigewordene Ressourcen der Notfall-Containerinstanz (NC) zugeordnet werden.

12. Verfahren nach einem der Ansprüche 6 bis 11, wobei nach einer Wiederherstellung der Kommunikationsverbindung (30) die in der Notfall-Containerinstanz (NC) gesammelten Daten an die Anwendungsschnittstelle (10) übermittelt werden.

13. Verfahren nach einem der vorangehenden Ansprüche, wobei nach einer Wiederherstellung der Kommunikationsverbindung (30) in der Orchestrierungsslaveeinheit (OSL) eine Normalbetrieb-Richtlinie von der Orchestrierungsmastereinheit (OMA) empfangen und das Endgerät (20) in einen Normalzustand übergeführt wird.

14. System zur Orchestrierung einer Container-basierten Anwendung, die auf einem Endgerät (20) ausgeführt wird, umfassend das Endgerät (20), das eine Orchestrierungsslaveeinheit (OSL) enthält und eine über eine Kommunikationsverbindung (30) mit dem Endgerät (20) verbundene Orchestrierungsmastereinheit (OMA) enthält, die derart ausgebildet sind
- eine Implementierungsinformation (DI) in der Orchestrierungsslaveeinheit (OSL) über die Kommunikationsverbindung (30) von der Orchestrierungsmastereinheit (OMA) zu empfangen,
- die Anwendung anhand der Implementierungsinformation (DI) durch die Orchestrierungsslaveeinheit (OSL) zu konfigurieren und/oder zu steuern, wobei
- die empfangene Implementierungsinformation (DI) zusätzlich auf eine Speichereinheit (ME) im Endgerät (20) persistent gespeichert wird, und
- wenn die Kommunikationsverbindung (30) unterbrochen ist, die letzte gespeicherte Implementierungsinformation (DI) von der Orchestrierungsslaveeinheit (OSL) abgerufen und anhand der letzten gespeicherten Implementierungsinformation (DI) die Anwendung konfiguriert und/oder gesteuert wird.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
